# EUROPÄISCHE PATENTSCHRIFT

(11) **EP 0 571 774 B1**
(45) Veröffentlichungstag und Bekanntmachung des Hinweises auf die Patenterteilung: **13.09.1995**
(21) Anmeldenummer: 93106951.2
(22) Anmeldetag: 29.04.1993
(51) Int. Cl.: G11B 27/029, H04N 5/92, G11B 27/30, G11B 27/32, H04N 5/91

(54) **Videorecorder für die Nachbearbeitung von Videoaufzeichnungen**
Video recorder for the post-production of video records
Magnétoscope pour le post-traitement des enregistrements vidéo

(30) Priorität: 23.05.1992 DE 4217207
(43) Veröffentlichungstag der Anmeldung: 01.12.1993
(73) Patentinhaber: Grundig E.M.V. Elektro-Mechanische Versuchsanstalt Max Grundig GmbH & Co. KG, 90762 Fürth (DE); IR3 Video International GmbH, 90471 Nürnberg (DE)
(72) Erfinder: Kornhaas, Wolfgang, GRUNDIG E.M.V., Max Grundig, W-8510 Fürth/Bay (DE); Richter, Manfred Dipl.-Ing. (FH), GRUNDIG E.M.V., Kurgartenstrasse 37, W-8510 Fürth/Bay (DE)

(56) Entgegenhaltungen:
- EP-A- 0 455 874
- EP-A- 0 546 578
- DE-A- 3 925 628
- US-A- 5 012 356
- RESEARCH DISCLOSURE Nr. 335, M rz 1992, HAVANT GB Seite 165 , XP300923 'After recording of VITC signals' Dokument Nr. 33503
- FUNKSCHAU. Bd. 63, Nr. 10, 3. Mai 1991, MUNCHEN DE Seiten 54 - 56 , XP229384 'Das Video-Archiv ist eingebaut'
- JP-352471/91

## Beschreibung

Die Erfindung betrifft ein Verfahren und einen Videorecorder für die Nachbearbeitung von Videoaufzeichnungen, welche das nachträgliche Einfügen von Informationen in Abschnitte der Aufzeichnungsspuren gestatten, die üblicherweise keine sichtbaren Videoinformationen enthalten.

Bei der Aufzeichnung mit Videorecordern ist es bekannt, zusätzliche Informationen in Abschnitten der Aufzeichnungsspuren ohne sichtbare Videoinformationen mitaufzuzeichnen. Bei diesen Abschnitten handelt es sich um die Bildzeilen, die in der vertikalen Austastlücke liegen. Für das erste Halbbild sind dies die Bildzeilen sechs bis 22, für das zweite Halbbild die Bildzeilen 319 bis 335. Diese zusätzlichen Informationen können Prüfzeilen, Videotext-Informationen oder Timecode-Informationen sein.

Durch die große Verbreitung von Camcordern nimmt die Bedeutung der Timecode-Informationen immer mehr zu, da nur unter Verwendung derartiger Informationen der bild- oder halbbildgenaue elektronische Schnitt von Videoaufzeichnungen möglich ist. In dem Aufsatz "Studiostandard für Heim-Videorecorder", erschienen in Funkschau 25/1990, Seite 50ff, ist der Vertical Interval Timecode (VITC) beschrieben. Die Informationen des VITC werden während der Aufzeichnung der Videosignale bildsynchron erzeugt, in die vertikalen Austastlücken der Halbbilder eingefügt und mit aufgezeichnet. Wurden bei der Aufzeichnung die Timecode-Informationen nicht gleichzeitig mit aufgezeichnet, so ist das nachträgliche Einfügen nur dann möglich, wenn eine Kopie angefertigt wird, in welche die VITC-Informationen eingefügt werden. Durch das Anfertigen einer Kopie werden allerdings Bild- und Tonqualität verschlechtert.

Diese Verschlechterung kann vermieden werden, wenn eine spezielle Betriebsart für den Videorecorder vorgesehen wird, die das nachträgliche Einfügen von Informationen in die vertikalen Austastlücken erlaubt. In dieser Betriebsart wird ständig zwischen Wiedergabebetrieb und Aufzeichnungsbetrieb umgeschaltet. Dabei wird während des Wiedergabebetriebs die Position der vertikalen Austastlücke der jeweiligen Aufzeichnungsspur ermittelt, und während des Aufzeichnungsbetriebs werden die Informationen in die Zeilen der vertikalen Austastlücken eingeschrieben. Ein derartiger Videorecorder ist bekannt und wird beispielsweise sowohl in DE 40 14 513 A1 als auch in der nicht vorveröffentlichten EP 546 578 A2 beschrieben.

Als nachteilig ist bei dem bekannten Stand der Technik anzusehen, daß es bei Videorecordern mit frequenzmodulierter Aufzeichnung der Tonsignale durch das nachträgliche Einfügen der Informationen in die vertikalen Austastlücken zu einer Störung der Tonsignale kommt. Wurden Videosignale nach der PAL-Norm mit 50 Halbbildern aufgezeichnet, so ergibt sich eine mit einem Rhythmus von 50 Hz schwankende Störabstandsverschlechterung der FM-Tonsignale.

Aufgabe der Erfindung ist es deshalb, ein Verfahren und einen Videorecorder anzugeben, mit denen es möglich ist, nachträglich Aufzeichnungen in Abschnitten der Aufzeichnungsspuren ohne sichtbare Videoinformationen vorzunehmen, ohne die Qualität vorhandener, frequenzmodulierter Tonsignale zu beeinträchtigen.

Die Lösung der Aufgabe erfolgt bei dem erfindungsgemäßen Verfahren und Videorecorder dadurch, daß der Aufsprechstrom für die nachträgliche Aufzeichnung der Informationen kleiner als der Aufsprechstrom bei der ursprünglichen Aufzeichnung der Videosignale gewählt wird.

Der Vorteil der Erfindung liegt darin, daß es durch die nachträgliche Aufzeichnung von Informationen in die vertikalen Austastlücken zu keiner Störabstandsverschlechterung der Tonsignale kommt, und daß die nachträglich aufgezeichneten Informationen trotz des abgesenkten Aufsprechstroms fehlerfrei wiedergegeben werden können.

Weitere Vorteile ergeben sich aus der nachfolgenden Beschreibung eines erfindungsgemäßen Videorecorders sowie aus den Unteransprüchen.

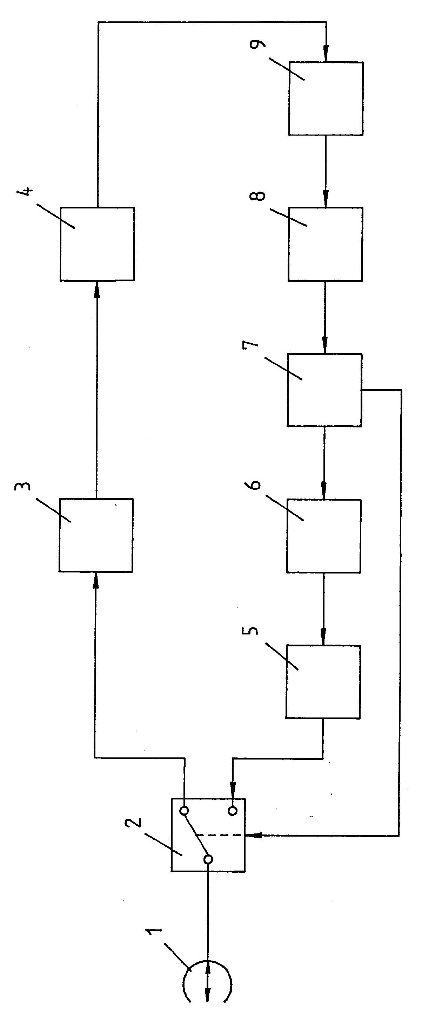

Die einzige Figur zeigt ein Blockschaltbild der für das nachträgliche Einfügen von Timecode-Informationen relevanten Bestandteile eines erfindungsgemäßen Videorecorders. Zur Beschreibungsvereinfachung wurde nur ein Videokopf dargestellt.

Der Videorecorder enthält einen Videokopf 1, einen Umschalter 2 zum Umschalten zwischen Wiedergabe- und Aufzeichnungsbetrieb, einen Kopfverstärker 3, einen Demodulator 4, ein Amplitudensieb 9 zur Abtrennung der Vertikal- und Horizontalimpulse vom demodulierten Videosignal, einen Synchrongenerator 8, eine Einrichtung 7 zur Erzeugung der VITC-Informationen, einen Modulator 6 und einen Aufsprechverstärker 5.

Neben den normalen Betriebsarten wie Aufzeichnung und Wiedergabe verfügt der Videorecorder über eine weitere Betriebsart. Diese Betriebsart ist für das nachträgliche Hinzufügen von Informationen in die vertikalen Austastlücken bereits vorhandener Aufzeichnungen vorgesehen. Dabei liest der Videokopf 1 Videosignale von einem nicht dargestellten Videomagnetband. Die wiedergegebenen Videosignale werden vom Kopfverstärker 3 verstärkt und vom Demodulator 4 demoduliert. Vom demodulierten Videosignal werden mittels Amplitudensieb 9 die vertikalen und horizontalen Synchronimpulse abgetrennt und vom Synchrongenerator 8 wird daraus eine Synchronreihe gebildet, die synchron zu dem wiedergegebenen Videosignal ist. In der unten beschriebenen Einrichtung 7 werden der Synchronreihe die VITC-Informationen hinzugefügt. Das resultierende Signal wird vom Modulator 6 frequenzmoduliert, vom Aufsprechverstärker 5 verstärkt und über den Umschalter 2 so an den Videokopf 1 angelegt, daß es in den vertikalen Austastlücken aufgezeichnet wird. Dazu stellt die Einrichtung 7 ein Umschaltsignal zur Verfügung.

Die Umschaltung vom Wiedergabebetrieb in den Aufzeichnungsbetrieb ist für die Synchronität der im Synchrongenerator 8 erzeugten Synchronreihe unerheblich, da die Umschaltung nur für jeweils sehr kurze Zeiträume erfolgt. Die Schwungradeigenschaft des Synchrongenerators 8 sorgt dafür, daß die auftretende Phasendifferenz vernachlässigbar gering bleibt.
Statt dem dargestellten Synchrongenerator 8, der die vollständige Synchronreihe erzeugt, kann auch ein Synchrongenerator verwendet werden, der nur horizontale Synchronimpulse zur Verfügung stellt. In diesem Fall werden während des Wiedergabebetriebs die Synchronimpulse des Amplitudensiebs 9 verwendet, während der Aufzeichnung die horizontalen Synchronimpulse des Synchrongenerators.

Die Einrichtung 7 kann im wesentlichen von dem ohnehin zu Steuerungszwecken in Videorecordern vorhandenen Mikrocomputer gebildet werden. Diesem werden die Synchronimpulse des Amplitudensiebs 9 bzw. die Synchronreihe des Synchrongenerators 8 zugeführt, aus denen der Mikrocomputer neben dem oben beschriebenen Umschaltimpuls die eigentlichen VITC-Informationen bildet. Die VITC-Informationen bestehen aus einem 90 Bit breiten Datenwort, wie es in der IEC-Norm 461 festgelegt ist. Zweckmäßigerweise werden die VITC-Informationen mit der Taktrate des Mikrocomputers erzeugt, seriell in ein Schieberegister (90 Bit lang) eingelesen und mit der für die Aufzeichnung benötigten Taktrate ausgelesen. Wird das Schieberegister als Ringzähler aufgebaut, können die VITC-Informationen mehrfach ausgelesen werden, beispielsweise zur Erreichung einer höheren Fehlersicherheit durch mehrfache Aufzeichnung auf das Magnetband.

Die VITC-Informationen werden zwischen die horizontalen Synchronimpulse eingefügt, welche die Zeilen der vertikalen Austastlücke begrenzen. Das so zusammengesetzte Signal wird vom Modulator 6 moduliert, vom Aufsprechverstärker 5 verstärkt und über den Umschalter 2 zur Aufzeichnung in die vertikale Austastlücke dem Videokopf 1 zugeführt. Neben dem beschriebenen Fall der Bildung eines Gesamtsignals aus horizontalen Synchronsignalen und VITC-Informationen sowie der Aufzeichnung dieses Singnals in der vertikalen Austastlücke ist es auch möglich (siehe oben genannte Offenlegungsschrift DE 40 14 513 A1), den Umschalter 2 für jede aufzuzeichnende Bildzeile innerhalb der vertikalen Austastlücke umzuschalten. Die bereits vorhandenen horizontalen Synchronimpulse werden dann nicht durch neue horizontale Synchronimpulse des in der Einrichtung 7 zusammengesetzten Signals überschrieben.

Bei der Einstellung des vom Aufsprechverstärker 5 gelieferten Aufsprechstroms ist darauf zu achten, daß ein genügend großer Störabstand für die VITC-Informationen erreicht wird, daß aber gleichzeitig durch die nachträgliche Aufzeichnung der VITC-Informationen der Wiedergabepegel der FM-Tonsignale nicht verschlechtert wird.

Von VHS-Videorecordern mit FM-Aufzeichnung der HiFi-Tonsignale ist es bekannt, Videosignale und Tonsignale winkelentkoppelt in der selben Aufzeichnungsspur aufzuzeichnen. Dabei wird zuerst die Aufzeichnung der Tonsignale vorgenommen. Aufgrund der kleineren Modulationsfrequenz und des kleineren Modulationshubs wird das magnetische Material des Magnetbandes bei der Tonaufzeichnung bis in eine Tiefe von etwa 1,5 µm magnetisiert. Bei der nachfolgenden Aufzeichnung der Videosignale wird wegen der höheren Frequenzen nur eine Magnetisierung bis in die Tiefe von etwa 0,5 µm erreicht. Dadurch wird eine Verminderung des Wiedergabepegels der FM-Tonsignale von etwa 12 dB hervorgerufen. Eine genauere Schilderung dieser Zusammenhänge kann beispielsweise dem Aufsatz "THEORETICAL DESCRIPTION OF FM AUDIO RECORDING IN HIFI-VHS", von W. Schmitt und A. Eiling, erschienen in IEEE TRANSACTIONS ON MAGNETICS, VOL. 26, NO. 5, SEPTEMBER 1990, Seite 2131ff, entnommen werden.

Wird bei der nachträglichen Aufzeichnung der frequenzmodulierten VITC-Signale mit den Videomagnetköpfen der Aufsprechstrom um etwa 5 dB gegenüber dem Aufsprechstrom bei der Aufzeichnung der Videosignale reduziert, so kommt es zu keiner weiteren Verschlechterung des Wiedergabepegels der FM-Tonsignale. Während durch eine derartige nachträgliche Aufzeichnung der VITC-Informationen keine Beeinflussung der Tonwiedergabe verursacht wird, wird der Wiedergabepegel der VITC-Informationen um etwa 3 dB verringert, dies ist aber für eine spätere Wiedergabe der VITC-Informationen unerheblich, da die Rückgewinnung der digitalen VITC-Informationen weniger störanfällig ist als beispielsweise die Rückgewinnung analoger Videosignale.

Für den in der Figur gezeigten Fall, daß ein gesonderter Modulator 6 und ein gesonderter Aufsprecllverstärker 5 vorhanden sind, muß der Aufsprechverstärker 5 so eingestellt sein, daß sich gegenüber dem Aufsprechverstärker für die Videosignale die oben beschriebene Reduzierung des Aufsprechstroms ergibt. Für den Fall, daß für die Aufzeichnung der Videosignale und der VITC-Signale eine gemeinsame Signalverarbeitungseinrichtung aus Modulator und Aufsprechverstärker vorgesehen ist, muß der Verstärkungsfaktor des Aufsprechverstärkers einstellbar sein oder die Abschwächung des Aufsprechstroms kann beispielsweise durch Beschaltung mit einem geeignet dimensionierten Widerstandsnetzwerk erfolgen. Für diesen Fall ist es zweckmäßig, daß die Einrichtung 7 neben dem Umschaltsignal für Wiedergabe- und Aufzeichnungsbetrieb ein weiteres Steuersignal für die Einstellung des Verstärkungsfaktors des Aufsprechverstärkers liefert.

Die nachträgliche Aufzeichnung von Timecode-Informationen kann mit dem beschriebenen Videorecorder vollautomatisch erfolgen. Nach dem Einlegen einer Videobandkassette und der Auswahl der Betriebsart für die nachträgliche Aufzeichnung der Timecode-Informationen wird die Videobandkassette zum Anfang zurückgespult, und die nachträgliche Aufzeichnung der Timecode-Informationen wird durchgeführt. Dabei können auch Informationen auf der CTL-Spur ausgewertet oder während der Nachbearbeitung verändert werden. Beispielsweise kann überprüft werden, ob der Videobandkassette eine Nummer für ein Archivsystem zugeordnet wurde. Vor Beginn der nachträglichen Aufzeichnung kann diese Nummer geändert werden, bzw. bei fehlender Nummer kann eine Nummer vergeben werden, welche während der nachträglichen Aufzeichnung in der CTL-Spur aufgezeichnet wird.

Bei der Beschreibung des erfindungsgemäßen Videorecorders wurde davon ausgegangen, daß es sich bei den einzufügenden Informationen um Timecode-Informationen (VITC) handelt. Die Erfindung ist aber nicht auf die Aufzeichnung von Timecode-Informationen beschränkt, die Aufzeichnung anderer Informationen ist ebenso möglich.

## Patentansprüche

1. Verfahren für die Nachbearbeitung von Videoaufzeichnungen mittels eines Videorecorders, zum nachträglichen Einfügen frequenzmodulierter Zusatzinformationen mittels Videoköpfen in Abschnitte der Aufzeichnungsspuren, die üblicherweise keine sichtbaren Videoinformationen enthalten,
**dadurch gekennzeichnet**,
daß die nachträgliche Aufzeichnung frequenzmodulierter Zusatzinformationen mit einem Aufsprechstrom bewirkt wird, der geringer ist als der bei der Aufzeichnung von Videoinformationen verwendete Aufsprechstrom.

2. Verfahren nach Anspruch 1,
**dadurch gekennzeichnet**,
daß der Pegel des Aufsprechstroms für die nachträgliche Aufzeichnung der frequenzmodulierten Zusatzinformationen etwa 5 dB gegenüber dem Pegel des Aufsprechstroms für die Aufzeichnung der Videoinformationen verringert ist.

3. Videorecorder für die Nachbearbeitung von Videoaufzeichnungen, zum nachträglichen Einfügen frequenzmodulierter Zusatzinformationen in Abschnitte der Aufzeichnungsspuren, die üblicherweise keine sichtbaren Videoinformationen enthalten, der für jede Aufzeichnungsspur über
- einen Aufsprechverstärker (5) zur Verstärkung der aufzuzeichnenden Informationen,
- einen Umschalter (2) zur Umschaltung zwischen Aufzeichnung und Wiedergabe in den Abschnitten der Aufzeichnungsspuren ohne sichtbare Videoinformation und
- einen Videokopf (1) zur Aufzeichnung und Wiedergabe der Informationen auf Magnetband
verfügt,
**dadurch gekennzeichnet**,
daß der Aufsprechverstärker (5) für die Aufzeichnung der Zusatzinformationen einen Aufsprechstrom zur Verfügung stellt, der geringer als der bei der Aufzeichnung von Videoinformationen zur Verfügung gestellte Aufsprechstrom ist.

4. Videorecorder nach Anspruch 3,
**dadurch gekennzeichnet,**
daß der Aufsprechverstärker (5) den Pegel des Aufsprechstroms der Zusatzinformationen um etwa 5 dB gegenüber dem Pegel des Aufsprechstroms der Videoinformationen verringert.

5. Videorecorder nach Anspruch 3 oder 4,
**dadurch gekennzeichnet,**
daß für die nachträgliche Aufzeichnung der frequenzmodulierten Zusatzinformationen ein gesonderter Modulator (6) und ein gesonderter Aufsprechverstärker (5) vorhanden sind.

6. Videorecorder nach Anspruch 3 oder 4,
**dadurch gekennzeichnet**,
daß für die nachträgliche Aufzeichnung der frequenzmodulierten Zusatzinformationen und für die Aufzeichnung der Videoinformationen ein gemeinsamer Modulator und ein gemeinsamer Aufsprechverstärker vorhanden sind.

7. Videorecorder nach einem der Ansprüche 3 bis 6,
**dadurch gekennzeichnet,**
daß eine Betriebsart für die nachträgliche Aufzeichnung von frequenzmodulierten Zusatzinformationen vorgesehen ist, bei der neben der Aufzeichnung der frequenzmodulierten Zusatzinformationen eine Auswertung und/oder Aufzeichnung weiter Informationen in der CTL-Spur erfolgen kann.

8. Videorecorder nach einem der Ansprüche 3 bis 7, **dadurch gekennzeichnet,**
daß die Zusatzinformationen Timecode-Informationen nach VITC-Norm sind.

## Claims

1. Method for the postprocessing of video recordings by means of a video recorder and for the subsequent insertion of frequency-modulated additional information by means of video heads into sections of the recording tracks which do not normally contain any visible video information, characterized in that the subsequent recording of frequency-modulated additional information is effected with a recording current which is less than the recording current used in recording video information.

2. Method according to Claim 1, characterized in that the level of the recording current for the subsequent recording of the frequency-modulated additional information is reduced by about 5 dB compared with the level of the recording current for recording the video information.

3. Video recorder for the postprocessing of video recordings and for the subsequent insertion of frequency-modulated additional information into sections of the recording tracks which do not normally contain any visible video information, which video recorder has for each recording track
- a recording amplifier (5) for amplifying the information to be recorded,
- a two-way switch (2) for switching between recording and playback in the sections of the recording tracks not containing visible video information, and
- a video head (1) for recording and playing back the information on magnetic tape,
characterized in that the recording amplifier (5) provides, for the recording of the additional information, a recording current which is less than the recording current provided during the recording of video information.

4. Video recorder according to Claim 3, characterized in that the recording amplifier (5) reduces the level of the recording current of the additional information by about 5 dB compared with the level of the recording current of the video information.

5. Video recorder according to Claim 3 or 4, characterized in that a separate modulator (6) and a separate recording amplifier (5) are present for the subsequent recording of the frequency-modulated additional information.

6. Video recorder according to Claim 3 or 4, characterized in that a common modulator and a common recording amplifier are present for the subsequent recording of the frequency-modulated additional information and for the recording of the video information.

7. Video recorder according to one of Claims 3 to 6, characterized in that an operating mode is provided for the subsequent recording of frequency-modulated additional information, in which operating mode, an evaluation and/or recording of further information can be carried out in the CTL track in addition to the recording of the frequency-modulated additional information.

8. Video recorder according to one of Claims 3 to 7, characterized in that the additional information is time-code information according to VITC standard.

## Revendications

1. Procédé pour le post-traitement d'enregistrements vidéo à l'aide d'un enregistreur vidéo, pour l'insertion ultérieure d'informations supplémentaires modulées en fréquence, à l'aide de têtes vidéo, dans des sections des pistes d'enregistrement, qui ne contiennent habituellement aucune information vidéo visible, caractérisé en ce que l'enregistrement ultérieur d'informations supplémentaires modulées en fréquence est exécuté avec un courant d'enregistrement qui est inférieur au courant d'enregistrement utilisé lors de l'enregistrement de l'information vidéo.

2. Procédé selon la revendication 1, caractérisé en ce que le niveau du courant d'enregistrement pour l'enregistrement ultérieur des informations supplémentaires modulées en fréquence est réduit d'environ 5 dB par rapport au niveau du courant d'enregistrement utilisé pour l'enregistrement des informations vidéo.

3. Enregistreur vidéo pour le post-traitement d'enregistrements vidéo, pour l'insertion ultérieure d'informations supplémentaires modulées en fréquence dans des sections des pistes d'enregistrement, qui ne contiennent habituellement aucune information vidéo visible, et qui dispose, pour chaque piste d'enregistrement,
- d'un amplificateur d'enregistrement (5) pour amplifier les informations à enregistrer,
- d'un commutateur (2) pour réaliser la commutation entre l'enregistrement et la reproduction dans les sections des pistes d'enregistrement sans informations vidéo visible, et
- une tête vidéo (1) pour l'enregistrement et la reproduction des informations sur une bande magnétique,
caractérisé en ce que l'amplificateur d'enregistrement (5) dispose, pour l'enregistrement des informations supplémentaires, d'un courant d'enregistrement qui est inférieur au courant d'enregistrement disponible lors de l'enregistrement d'informations vidéo.

4. Enregistreur vidéo selon la revendication 3, caractérisé en ce que l'amplificateur d'enregistrement (5) réduit le niveau du courant d'enregistrement des informations supplémentaires d'environ 5 dB par rapport au niveau du courant d'enregistrement des informations vidéo.

5. Enregistreur vidéo selon la revendication 3 ou 4, caractérisé en ce que pour l'enregistrement ultérieur des informations supplémentaires modulées en fréquence, il est prévu un modulateur particulier (6) et un amplificateur d'enregistrement particulier (5).

6. Enregistreur vidéo selon la revendication 3 ou 4, caractérisé en ce que pour l'enregistrement ultérieur des informations supplémentaires modulées en fréquence et pour l'enregistrement des informations vidéo, il est prévu un modulateur commun et un amplificateur commun d'enregistrement.

7. Enregistreur vidéo selon l'une des revendications 3 à 6, caractérisé en ce qu'il est prévu un type de fonctionnement pour l'enregistrement ultérieur d'informations supplémentaires modulées en fréquence, lors duquel une évaluation et/ou un enregistrement d'autres informations sur la piste CTL peut être exécuté en dehors de l'enregistrement des informations supplémentaires modulées en fréquence.

8. Enregistreur vidéo selon les revendications 3 à 7, caractérisé en ce que les informations supplémentaires sont des informations "timecode" (c'est-à-dire de code temporel) selon la norme VITC.
